# EUROPEAN PATENT APPLICATION

(11) **EP 4 768 759 A1**
(43) Date of publication of application: **01.07.2026**
(21) Application number: 24223489.6
(22) Date of filing: 27.12.2024
(51) Int. Cl.: F16K 5/06, F16K 27/06

(54) **BALL VALVE WITH INCORPORATED FILTER**

(71) Applicant: Caleffi S.p.A., 28010 Fontaneto d'Agogna (NO) (IT)
(72) Inventor: CALEFFI, Marco, 28010 Fontaneto D'Agogna (IT)
(74) Representative: Luppi Intellectual Property S.r.l.

(57) **Abstract**

A ball valve (10), in particular for sanitary systems and heating/cooling systems, has a valve body (11) in which a ball shutter (15) equipped with a hollow stem (17) is housed and can be moved in rotation between an open and a closed position of the valve, a hollow control device (32) with a through hole arranged externally and bound in rotation to the stem (17) to move the ball shutter (15) between the open and closed positions, a filter (23) housed in the ball shutter (15), suitable for filtering the fluid in the open position, and removable through the control device (32), a cap (42) for closing the ball shutter (15), wherein the cap (42) is bound to the filter (23) and screw-coupled with the stem (17) of the ball shutter (15) so that the direction of unscrewing of the closing cap (42) corresponds to the direction of rotation of the shutter (15) and of the control unit (32) from the open to the closed position. A ball valve is thus realised which allows easy and safe removal of the filter for cleaning it in any valve installation space.

## Description

### Background of the invention

The subject of this invention is a ball valve with incorporated filter, intended for use in sanitary systems and heating/cooling systems.

### State of the art

In the circuits of sanitary systems or heating/cooling systems, one or more filters are used which have the specific function of retaining the dirt particles present in the fluid of the system, which could compromise the operation of the system components.

These filters have internally a removable filter mesh which must be cleaned with a certain periodicity to prevent its clogging from obstructing the circulation of the fluid.

To allow the cleaning of the filter mesh, there is provided a shut-off valve upstream of the filter and a shut-off valve downstream of the filter: these shut-off valves allow the filter to be isolated and therefore allow the filter to be opened, the filter mesh to be extracted for cleaning, the filter mesh to be reinserted, and the filter to be closed again.

Obviously, having two shut-off valves for cleaning the filter complicates the system both from a structural and functional point of view and from the point of view of the space. On the other hand, it cannot be done without the two shut-off valves because in lack of them the opening of the filter would lead to the leakage of the fluid present in the system circuit.

There are ball valves on the market which incorporate a removable filter and do not require providing two shut-off valves. However, the removal of the filter is difficult if the part of the circuit where the ball valve is located is housed in confined spaces.

### Object of the invention

The object of the present invention is to propose a ball valve with incorporated filter that can overcome the above-mentioned drawbacks.

### Brief description of the invention

This object is achieved by means of a ball valve with incorporated filter in accordance with the first claim.

### Brief description of the drawings

To better understand the invention, a description of an exemplary embodiment thereof is given below, illustrated in the attached drawings in which:
Figs. 1,2 are elevation views of a ball valve with incorporated filter according to the invention, respectively in the open position and in the closed position;
Figs.3,4 are top plan views of the aforementioned ball valve respectively in the open position of Fig. 1 and in the closed position of Fig.2;
Figs.5,6 are axial section views of the aforementioned ball valve respectively in the open position of Fig. 1 and in the closed position of Fig.2;
Fig.7 is an exploded perspective view of the aforementioned ball valve;
Fig.8 shows in a perspective view a component of the aforementioned ball valve in two different angular positions rotated by 90° with respect to each other;
Fig.9 is an exploded section view of the aforementioned ball valve in the maintenance position;
Fig. 10 is an exploded perspective view of a variant of a component of the aforementioned ball valve.

### Detailed description of the invention

The ball valve with incorporated filter shown is generally indicated with 10.

The valve 10 is intended for use in sanitary systems and heating/cooling systems.

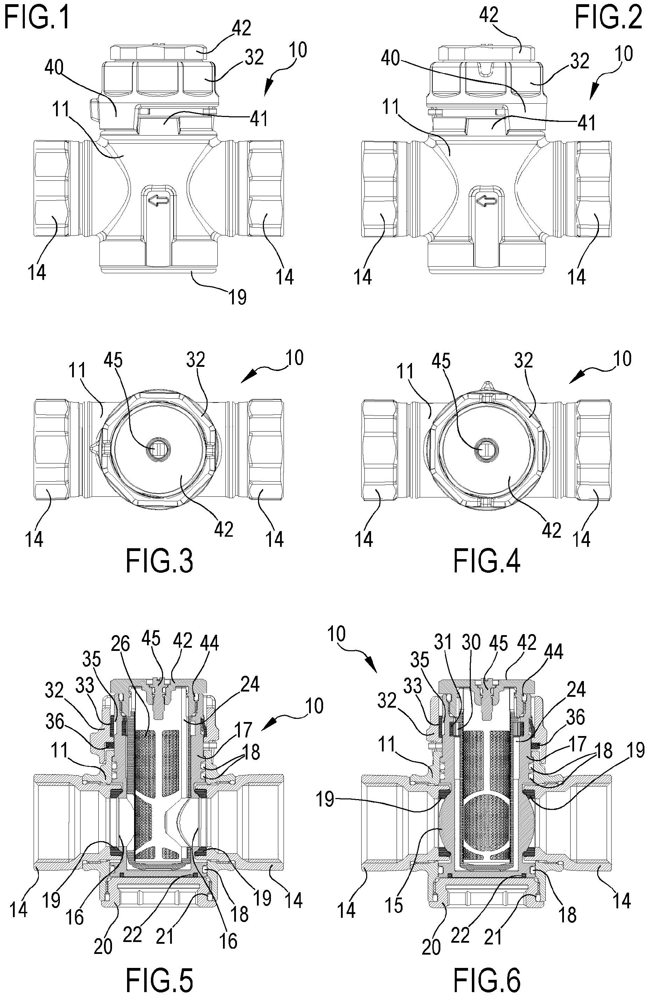

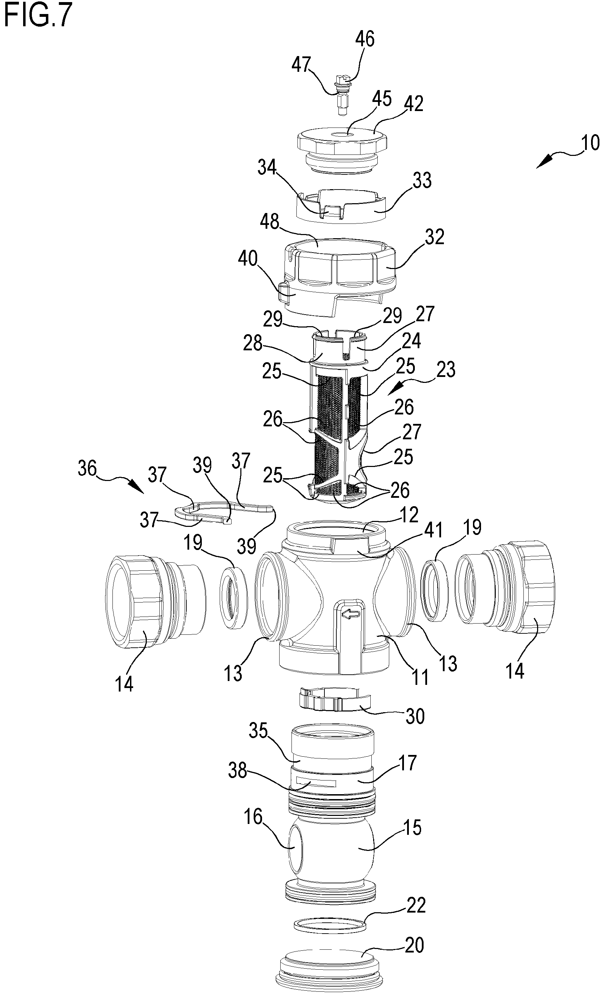

For the description of the valve 10 as a whole, reference is made to Figs. 1-8.

The valve 10 has a hollow valve body 11 in which a cylindrical seat 12 open at the ends and a pair of opposed cylindrical openings 13 are obtained, arranged along the same axis perpendicular to the axis of the cylindrical seat 12.

Two respective polygonal head sleeves 14 are screwed onto the two openings 13, which serve as attachments for the pipes of the system in which the valve 10 is mounted. One of the two sleeves 14 is the inlet of valve 10 while the other of the two sleeves 14 is the outlet of valve 10.

In the seat 12 of the body 11 of the valve 10 there is a hollow ball shutter 15 suitable for rotating in the seat 12 between a closed position and an open position of valve 10. The shutter 15 has two coaxial opposed holes 16: one of the two holes 16 is an inlet hole and is intended to be located at the inlet sleeve 14 while the other of the two holes 16 is an outlet hole and is intended to be located at the outlet sleeve 14. The shutter 15 is equipped with a hollow cylindrical stem 17 and is also provided with sealing gaskets 18 which abut in opposite positions against the cylindrical seat 12 near the ends of the latter.

Between each sleeve 14 and the ball shutter 15 there is a respective annular sealing gasket 19.

The seat 12 is closed at one end at the ball shutter 15 by a bottom cap 20 screwed into seat 12 with an annular sealing gasket 21 interposed. An anti-friction ring 22 is placed between the bottom cap 20 and the ball shutter 15.

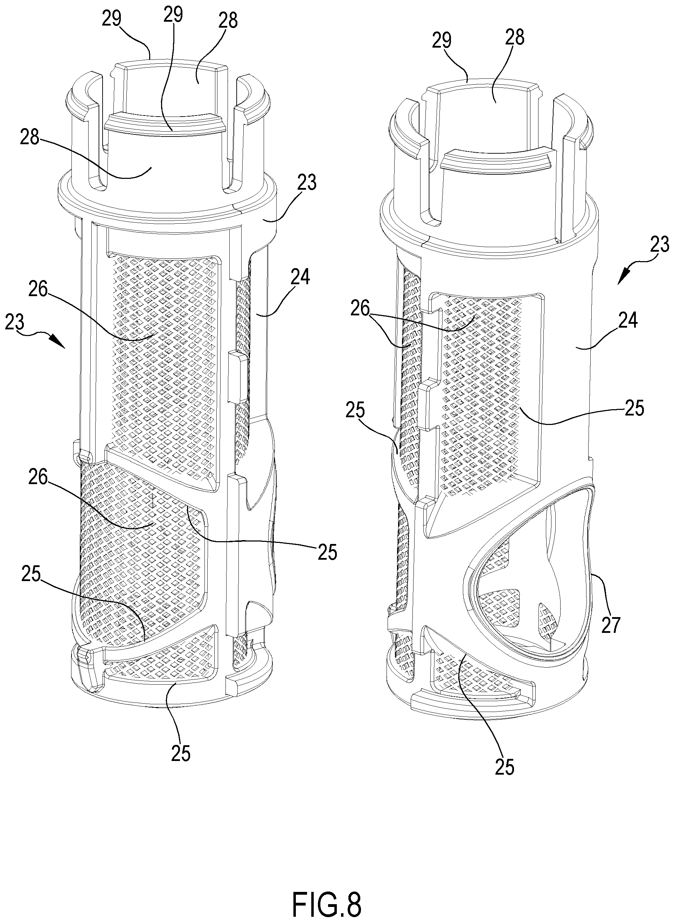

The shutter 15 houses a filter 23, clearly shown in enlarged view in Fig.8, intended to retain dirt particles. The filter 23 has a hollow cylindrical body 24 which has on the side wall a series of openings 25 closed by a filtering mesh 26 and a through hole 27 without a filtering mesh, intended to match the inlet hole 16 of the shutter 15 in the open position of the latter. At one end, the body 24 of the filter 23 has a series of side walls 28 arranged in an annular shape and each provided with an edge in relief 29.

In the stem 17 of shutter 15 there is mounted an elastic profile half-ring 30 made of plastic, substantially C-shaped, inserted into a corresponding semi-annular recess 31 of the stem 17 by means of an elastic coupling. The half-ring 30 protrudes inside the stem 17 and defines a profile which matches a corresponding profile of the filter 23 so as to determine a unique insertion of the filter 23 into the stem 17 and to bind the filter 23 in rotation with the stem 17.

A hollow polygonal head control 32 with a through hole 48, intended for actuating the shutter 15, is bound to the stem 17 of the shutter 15. The control 32 is axially bound to the stem 17 by means of a plastic ring 33 equipped with teeth 34 inserted by means of an elastic snap into an annular groove 35 of the stem 17. The control 32 is rotationally bound to the stem 17 by means of a metal half-ring 36 of a substantially "C" shape provided with linear sections 37 inserted into corresponding linear notches 38 obtained in the stem 17; the half-ring 36 has extreme sections 39 folded outwards against which a "C" shaped edge 40 of the control 32 abuts.

On the body 11a stop tooth 41 is obtained against which one or the other end of the "C" shaped edge 40 of the polygonal head control 32 abuts, as will be seen later.

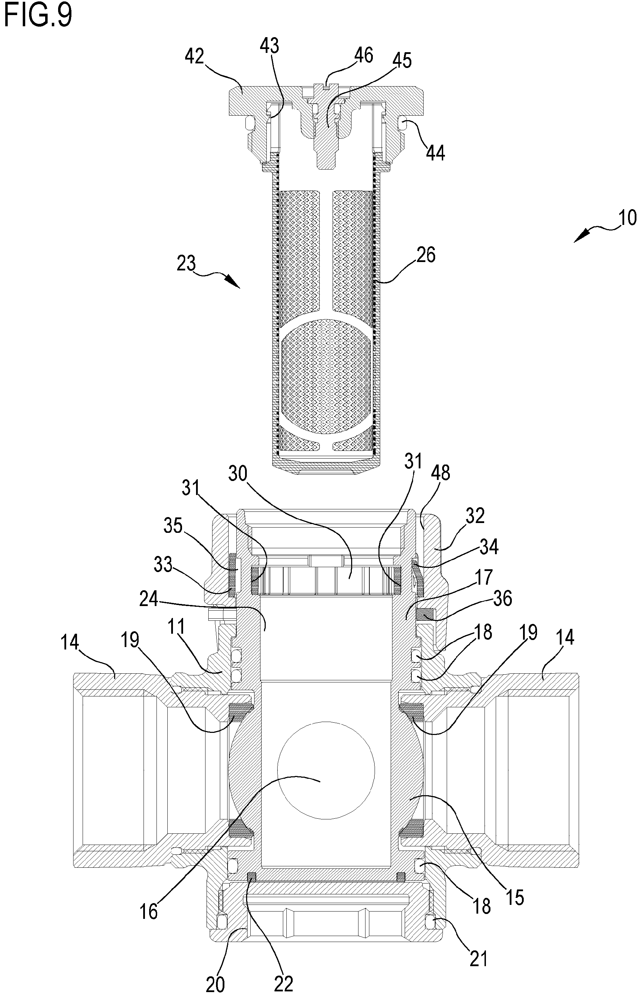

A polygonal closing cap 42 is axially attached to the top of the filter 23, screwed to the top of the stem 17 of the ball shutter 15. The axial constraint of the cap 42 with the filter 23 is obtained by means of an elastic snap coupling of one of its internal annular protrusions 43, shown in Fig.9, with the edges 29 of the series of walls 28 of the body 24 of the filter 23. The closing cap 42 is equipped with an annular seal 44 which abuts against the inner wall of the stem 17 of the shutter 15.

In the closing cap 42 a threaded hole 45 is centrally obtained, into which a vent screw 46 is screwed, equipped with an annular gasket 47 abutting against the wall of the hole 45.

The unscrewing direction of the closing cap 42 corresponds to the direction of rotation of the ball shutter 15 and thus of the control 32 from the open position to the closed position.

The operation and maintenance of valve 10 are described below.

To open and close valve 10, the control 32 is rotated with a standard wrench. The rotation of the control 32, which is constrained in rotation to the ball shutter 15, causes the rotating movement of the shutter 15 between the closed position and the open position.

In the open position of the valve 10, shown in Figs. 1,3,5, the holes 16 of the shutter 15 are located at the sleeves 14 so as to allow the fluid of the system to pass through the valve 10.

In the closed position of the valve 10, shown in Figs.2,4,6, the holes 16 are angularly separated from the sleeves 14 and the body of the shutter 15 closes the passage of the fluid into the valve 10.

The rotation of the control 32 and thus of the shutter 15 between the closed position and the open position is 90°. The stop of one or the other end of the edge 40 of the control 32 against the tooth 41 of the valve body 11 defines the 90° angular travel of the control itself.

In the open position, hole 27 of the filter 23 is located at the inlet sleeve 14 so that the dirt particles present in the inlet fluid are retained by the filtering mesh 26 and collect inside the filter 23.

All the sealing gaskets 18,19,21,44,47 described above provide for the perfect sealing of the valve 10.

To clean the filter 23, it is sufficient to move the shutter 15 to the closed position using the control 32, unscrew the closing cap 42 from the stem 17 of the shutter 15 using a standard wrench, and, as shown in Fig.9, remove the closing cap 42 with the filter 23 bound to it from the shutter 15 and clean the filter 23.

Once the filter 23 has been cleaned, it is reinserted into the shutter 15 in the unique position determined by the half-ring 30 and the plan profile of the filter 23, and the closing cap 42 bound to it is screwed back into the stem 17 of the ball shutter 15.

The possibility of removing the filter 23 from the control 32 by an unscrewing rotation of the closing cap 42 in the closing direction of the valve 10 allows an easy removing of the filter 23 in any volume of space in which the valve 10 is located and without running the risk of fluid leaking from the valve 10.

It is therefore possible to remove the filter 23 even in confined spaces since the valve opening/closing control is always easily accessible to the operator both in large spaces and in confined spaces. By coinciding the rotation for opening the closing cap 42 with the rotation for closing the valve 10, an accidental opening of the valve 10 is prevented and therefore a leakage of the fluid of the system from the valve 10 through the hollow stem 17 and the polygonal head control 32.

By unscrewing the vent screw 46 after closing the valve 10, it is possible to relieve the internal hydraulic pressure of the valve 10 and thus make it easier to unscrew the closing cap 42.

In general, the fact that all maintenance operations, i.e. closing the valve 10, venting it using screw 47, and removing the filter 23, can be carried out on one side only, makes it possible to maintain valve 10 when it is installed in small environments such as cases, manifold boxes, etc.

The metal half-ring 36 gives particular strength to the rotational constraint between the control 32 and the stem 17.

The valve 10 described and illustrated is also simple and effective in construction.

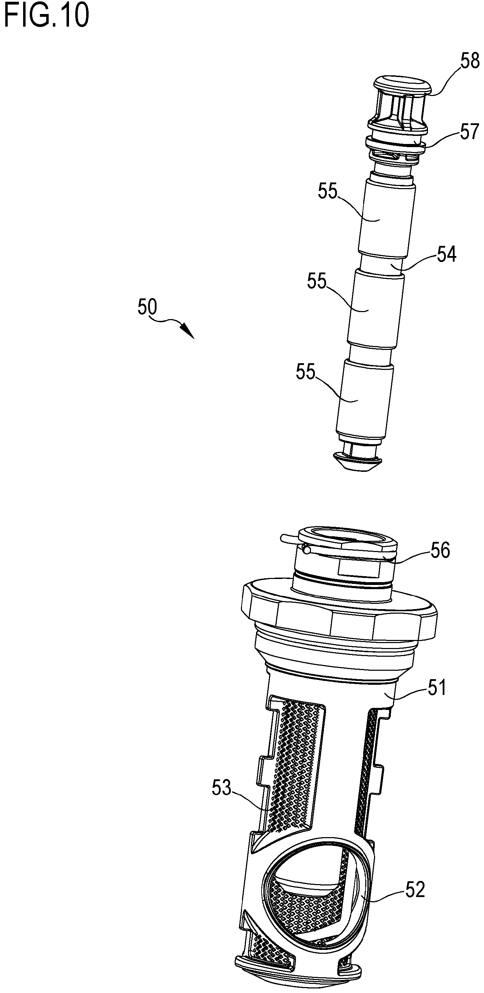

Fig. 10 shows a filter variant, i.e. a filter with magnets.

The filter shown in Fig.10, generically indicated by 50, has a body 51 substantially corresponding to the body 24 of the filter 23, having a hole 52 for the inlet of the fluid and a filtering mesh 53. In this case, however, a cylindrical rod 54 is provided longitudinally carrying a series of cylindrical magnets 55, inserted axially inside the filter 50. The rod 54 is locked inside the body 51 of the filter 50 by means of a half-ring 56 fixed on the body 51 which engages by means of an elastic snap hooking into an annular groove 57 obtained at the top of the rod 54. The rod 54 has a gripping head 58 which allows the rod to be comfortably gripped when it is inserted into the body 51 of the filter 50 or when it is removed for cleaning from the body 51 of the filter 50.

The function of magnets is to retain the ferromagnetic particles present in the fluid of the system.

Variations in the number and configuration of the components described and illustrated by the valve 10 are possible.

Also in the filter 23 it is possible to insert one or more magnets mounted on a suitable support which can be removed from the filter to perform the double function of mechanical and magnetic filtration.

## Claims

1. Ball valve (10), in particular for sanitary systems and heating/cooling systems, comprising:
a hollow valve body (11) in which a seat (12) is obtained in which a ball shutter (15) equipped with a hollow stem (17) is housed and can be moved in rotation between an open position for the passage of the fluid of the system between two connection sleeves (14) of said ball valve (10) and a closed position in which the passage of the fluid between these two connection sleeves (14) is closed,
a hollow control device (32) with a through hole (48) arranged externally and bound in rotation to the hollow stem (17) of the said ball shutter (15) to move said ball shutter (15) between said open and closed positions,
a filter (23) housed in said ball shutter (15), suitable for filtering the fluid in said open position, and which can be removed through said hollow control device (32) opened, **characterised by** the fact that it comprises a cap (42) for closing said ball shutter (15), wherein said cap (42) is attached to said filter (23), and wherein said cap (42) is screw-coupled with said hollow stem (32) so that the direction of unscrewing of said closing cap (42) corresponds to the direction of rotation of said ball shutter (15) and of said control device (32) from the open position to the closed position.

2. Ball valve (10) according to claim 1, wherein in said closing cap (42) a threaded hole (45) is obtained centrally, into which a vent screw (46) is screwed, equipped with an annular seal (47) which abuts against the wall of the hole (45), for the relief of the internal pressure of the said ball valve (10).

3. Ball valve (10) according to claim 1 or 2, wherein said filter (23) comprises a hollow cylindrical body (24) with a series of openings (25) on the side wall closed by a filtering mesh (26) and a through hole (27), without a filtering mesh, suitable for matching an inlet hole (16) of said ball shutter (15) in said open position.

4. Ball valve (10) according to any of the previous claims, wherein said stem (17) and said filter (23) have conjugate profiles that result in a unique insertion of said filter (23) into said stem (17) and bind said filter (23) to said stem (17) in rotation.

5. Ball valve (10) according to any of the previous claims, wherein said control device (32) comprises a substantially C-shaped edge (40) and said valve body (11) comprises one or more abutting elements (41) against which one or other of the ends of said edge (40) abuts in order to define a predetermined angular opening and closing travel of said control device (32).

6. Ball valve (10) according to any of the previous claims, wherein said control device (32) is rotationally bound to said stem (17) of said ball shutter (15) by means of a metal half-ring (36) which couples with said stem (17).

7. Ball valve (10) according to claim 6, wherein said control device (32) is axially bound to said stem (17) by means of a ring (33) which is coupled to said stem (17) by means of an elastic snap coupling.

8. Ball valve (10) according to any of the previous claims, wherein said filter (23) is rotationally bound to said stem (17) by means of a half-ring (30) which elastically couples with said stem (17).

9. Ball valve (10) according to any of the previous claims, wherein said closing cap (42) is axially bound to said filter (23) by means of an elastic snap coupling.

10. Ball valve (10) according to any of the previous claims, wherein said control device (32) has a polygonal profile to be operated by means of a standard wrench.

11. Ball valve (10) according to any of the previous claims, wherein said closing cap (42) has a polygonal profile to be operated by means of a standard wrench.

12. Ball valve (10) according to any of the previous claims, wherein one or more magnets mounted on a removable support are inserted into the said filter, for retaining the ferromagnetic particles present in the fluid of the system.
